# EUROPÄISCHE PATENTSCHRIFT

(11) **EP 1 559 351 B1**
(45) Veröffentlichungstag und Bekanntmachung des Hinweises auf die Patenterteilung: **10.09.2008**
(21) Anmeldenummer: 05001056.0
(22) Anmeldetag: 19.01.2005
(51) Int. Cl.: A47J 31/40, A47J 31/06

(54) **Brühvorrichtung für eine Kaffeemaschine**
Brewing device for a coffee machine
Dispositif d'extraction pour une machine à café

(30) Priorität: 28.01.2004 DE 102004004314
(43) Veröffentlichungstag der Anmeldung: 03.08.2005
(73) Patentinhaber: RED ROSES S.A., 1413 Luxemburg (LU)
(72) Erfinder: Werner Balkau, 8762 Schwanden (CH)
(74) Vertreter: Ponchiroli, Simone

(56) Entgegenhaltungen:
- EP-A- 0 838 185
- EP-A1- 1 208 782
- CA-A1- 2 121 998
- DE-A- 19 647 039

## Beschreibung

Die Erfindung betrifft eine nach dem Anspruch 1 ausgebildete Brühvorrichtung für eine Kaffeemaschine. Gattungsgemässe Brühvorrichtungen kommen sowohl in manuell zu betätigenden wie auch in vollautomatischen Espresso-Kaffeemaschine zum Einsatz. Die manuellen Maschinen verfügen im allgemeinen über einen Kartuschenhalter, der mittels eines Bajonettverschlusses am Brühkopf der Kaffeemaschine befestigt wird. Dabei kommen sowohl Kartuschenhalter zum Einsatz, die der direkten Aufnahme von Kaffeepulver dienen, wie auch Kartuschenhalter, die zur Aufnahme von sogenannten Portionenkapseln ausgebildet sind. Zum Aufstechen von solchen Portionenkapseln ist am Brühkopf der Kaffeemaschine ein Gitter angeordnet, das auf der Vorderseite mit spitzen Erhebungen versehen ist. Diese Erhebungen durchdringen den Deckel beim Befestigen der Portionenkapsel. Zum Perforieren des Kapselbodens sind am Boden des Kartuschenhalters ebenfalls Erhebungen angeordnet. Sobald Brühwasser in die Kapsel eingeleitet wird, wird der Kapselboden durch den hydraulischen Überdruck gegen diese Erhebungen gedrückt und dabei aufgebrochen. Eine derartige Kaffeemaschine ist beispieisweise aus der EP 521 187 bekannt. Daneben sind auch noch Brühköpfe für Kaffeemaschinen bekannt, bei denen kein Kartuschenhalter im vorgängig genannten Sinne vorgesehen ist, sondern die beiden Brühkopfteile schwenkbar zueinander angeordnet sind.

So ist beispielsweise aus der DE 94 15 374 U1 ein Brühkopf für Portionskapseln einer Espressomaschine bekannt, welcher aus einem Brühkopf-Unterteil und einem schwenkbar damit verbundenen Brühkopf-Oberteil besteht. Die beiden Teile bilden zwischen sich eine Aufnahme für eine Portionskapsel. Der Oberteil ist mit einem Heisswasserkanal versehen, der sich zu mehreren Hohlnadeln verzweigt, die dem Durchstossen der Kapselfolie dienen. Im Brühkopf-Unterteil sind Pyramidenstümpfe angeordnet, welche den Kapselunterteil durchdringen, sobald diese durch das Brühwasser unter Druck gesetzt und gegen diese Pyramidenstümpfe gedrückt wird. Zum Öffnen und Schliessen der beiden Brühkopfteile ist ein Verschlusshebel vorgesehen, der einen Ausstosser für die verbrauchte Kapsel betätigten kann.

Aus der EP 528 757 ist eine Brüheinrichtung bekannt, wie sie bei vollautomatischen Espressokaffeemaschinen zum Einsatz kommt. Diese Brüheinrichtung besteht aus einem Brühzylinder mit einem beweglich darin aufgenommenen Kolben, einem oberen, ortsfest angeordneten Verschlusskolben zum Verschliessen des Brühzylinders sowie einem Trichter zum Einfüllen von Kaffeepulver in den Brühzylinder. Seitlich des Brühzylinders ist eine Antriebsspindel angeordnet, mit welcher der Brühzylinder mittels eines Mitnahmeorgans kraftschlüssig verbunden ist. Dieser Spindelantrieb dient dem Verschieben des Brühzylinders, indem letzterer zum Aufbrühen des Kaffeepulvers nach oben in die Brühstellung gefahren wird, in welcher der Brühzylinder vom Verschlusskolben verschlossen wird. Nach dem Aufbrühen des Kaffeepulvers wird der Brühzylinder wieder nach unten gefahren. Bei dieser nach unten gerichteten Bewegung wird das ausgelaugte Kaffeepulver mittels des im Brühzylinder aufgenommenen Kolbens ausgestossen.

Aus der EP 1 090 574 A1 ist eine gattungsgemässe Vorrichtung zum Extrahieren einer Substanz zum Herstellen eines Getränks bekannt. Diese Vorrichtung, welche die Brüheinrichtung einer Kaffeemaschine bildet, besteht aus einem ersten ortsfesten und einem zweiten beweglichen Element. Die beiden Elemente sind um eine an ihrem hinteren Ende angeordnete Rotationsachse relativ zueinander verschwenkbar. Beide Elemente sind auf der Vorderseite mit einer Kavität zur Aufnahme der zu extrahierenden Substanz versehen. Zum Verschwenken, d.h. zum Öffnen und Schliessen der beiden Elemente ist ein kniehebelartiger Mechanismus vorgesehen, der aus einem zweiarmigen Schliesshebel und zwei Zugstangen besteht. Ein grundsätzlicher Nachteil der einer derartigen Vorrichtung anhaftet besteht darin, dass der Hebelmechanismus nicht im Bereich der Kavität an den beiden Elementen angreift. Dadurch gestaltet sich das Abdichten der Kavität relativ schwierig, da beim Aufbrühen des Kaffeepulvers im Bereich der Kavität hohe hydraulische Kräfte auftreten, welche die beiden Elemente auseinander drücken. Zudem führen die beiden Elemente beim Verschliessen keine Parallel- sondern eine Schwenkbewegung aus, was das Abdichten der Kavität zusätzlich erschwert.

Aus der EP 0 838 185 A1 ist eine Espresso Kaffeemaschine bekannt, die einen herkömmlichen, mit einem Handgriff versehenen Filterträger aufweist. Zum Befestigen des Filterträgers an einem Boiler genannten Verschlusskolben ist ein ringförmiges Zwischenelement vorgesehen. Dieses Zwischenelement weist auf der Oberseite zwei einander gegenüberliegende, ansteigende Vorsprünge auf, welche zusammen mit am Verschlusskolben angeordneten Vorsprüngen einen Bajonettverschluss bilden. Auf der Unterseite ist das Zwischenelement mit einer front- und einer rückseitigen, U-förmigen Öffnung versehen. Zwischen diesen beiden Öffnungen erstrecken sich seitlich zwei parallele Stege in die prismatische Nuten eingelassen sind und der Aufnahme des Filterträgers dienen. Der Filterträger kann von der Seite her in das Zwischenelement eingeführt bzw. daraus entnommen werden. Durch Verdrehen des in dem Zwischenelement aufgenommenen Filterträgers kann eine axiale Verschiebung des Filterträgers gegenüber dem Verschlusskolben und damit ein Verschliessen der im Filterträger angeordneten Kammer erreicht werden.

Aus der US 2002/144603 A1 ist eine Kaffeemaschine zum Extrahieren von in Portinenkapseln aufgenommenem Kaffee bekannt. Die Kaffeemaschine ist mit einem Brühkopf versehen, dessen Brühkammer zur Aufnahme und zur Entnahme einer Portionenkapsel seitlich verschiebbar ist. Im Brühkammerunterteil ist ein erstes Aufstechorgan angeordnet, welches die Portionenkapsel exzentrisch aufzustechen bestimmt ist. Auf der Oberseite der Brühkammer ist ein zweites, rohrförmiges Aufstechorgan angeordnet, welches an einem verschwenkbaren Arm befestigt und über eine flexible Leitung mit einem Heißwasserbereiter verbunden ist. Der Arm ist über einen Bolzen auf einer runden Platte abgestützt. Unter dieser Platte ist ein aufblasbarer Balg angeordnet, welcher mittels einer Luftpumpe entfaltbar ist, um den Arm nach unten zu drücken. Am unteren Ende des Bolzens ist eine Blende angeordnet, welche den unteren Teil des Heisswasserbereiters nach oben abdichtet, wenn der Balg aufgeblasen ist. Durch das Aktivieren der Luftpumpe und das Aufblasen des Balgs mit der gleichzeitigen Verschiebung des Arms wird die Portionenkapsel zuerst auf der Unterseite und danach auf der Oberseite mittels des rohrförmigen Aufstechorgans aufgestochen. Danach wird Heisswasser über die flexible Leitung in das rohrförmige Aufstechorgan gefördert und der in der Portinenkapsel aufgenommene Kaffee extrahiert.

In der DE 196 47 039 A1 ist eine Kaffeemaschine mit einem an Führungssäulen aufund abbewegbaren Brühkopf offenbart. Zum Bewegen des Brühkopfs ist ein Kniehebelmechanismus vorgesehen. Unterhalb des Brühkopfs sind zwei seitliche Führungsschienen angeordnet, in welchen eine Filterpfanne in der waagrechten Ebene verschiebbar geführt ist. In die Filterpfanne kann ein Siebträger eingesetzt werden, welcher sich zur Aufnahme von Kaffeepulver bzw. Portionenkapseln eignet.

Die EP 1 319 357 A1 beschreibt eine Vorrichtung zur Erzeugung von Schaum im Filter von Espresso-Kaffeemaschinen. Dazu ist auf der Unterseite eines das zu extrahierende Kaffeepulver aufnehmenden Gefässes eine Überdruckventil angeordnet. Dieses besteht aus einer Kugel, welche durch die Vorspannung einer Feder gegen eine Bohrung gepresst wird, über welche der zubereitete Kaffeeaufguss aus dem Gefäss austritt. Zum Verändern der erzeugten Schaummenge, kann die Vorspannung der Feder manuell verändert werden.

Außerdem sind das Patent EP 1 208 782 A1 und das Patent CA 2 121 998 bekannt. Beide zeigen Vorrichtungen für die Kaffeezubereitung, wobei ein Oberteil einen Innenteil und einen Aussenteil aufweist, die sich relativ zueinander in axialer Richtung nach der Bewegung eines Betätigungshebels bewegen.

Schliesslich ist aus der EP 1 183 975 A1 eine Kaffeemaschine zum Aufbrühen von in einer Kapsel abgepacktem Pulverkaffee bekannt. Diese Kaffeemaschine ist mit einem Brühkammergehäuse versehen, an dessen Boden mehrere Aufstechorgane angeordnet sind. Im Brühkammergehäuse sind ein oberer und ein unterer Kammerteil angeordnet. Der obere Kammerteil dient dem vertikalen Abstützen der Kapsel und ist mittels einer Druckfeder am unteren Kammerteil abgestützt. Um den Benutzer vor Verletzungen zu schützen, ist am oberen Kammerteil ein Schutzorgan angeordnet, welches den Zugriff zu den Aufstechorganen zu verwehren bestimmt ist.

Die Erfindung zielt darauf ab, eine Brühvorrichtung für eine Kaffeemaschine derart weiterzubilden, dass sie wenig bewegliche Teile aufweist, einfach und kompakt aufgebaut und leicht zu bedienen ist.

Hierzu wird nach der Erfindung eine Brühvorrichtung gemäss dem Anspruch 1 bereitgestellt.

Bevorzugte Ausführungsbeispiele der Erfindung sind in den abhängigen Ansprüchen 2 bis 16 umschrieben.

Nachfolgend wird ein bevorzugtes Ausführungsbeispiel der Kaffeemaschine anhand von Zeichnungen näher erläutert. In diesen Zeichnungen zeigt:
Fig. 1 eine perspektivische Ansicht einer mit einem Brühkammeroberteil und einem Brühkammerunterteil versehenen Brühvorrichtung;
Fig. 2 eine Seitenansicht der beiden Brühkammerteile gemäss Fig. 1;
Fig. 3 die Brühvorrichtung gemäss Fig. 1 in einem ersten Längsschnitt, und
Fig. 4 die Brühvorrichtung gemäss Fig. 1 in einem zweiten Längsschnitt;

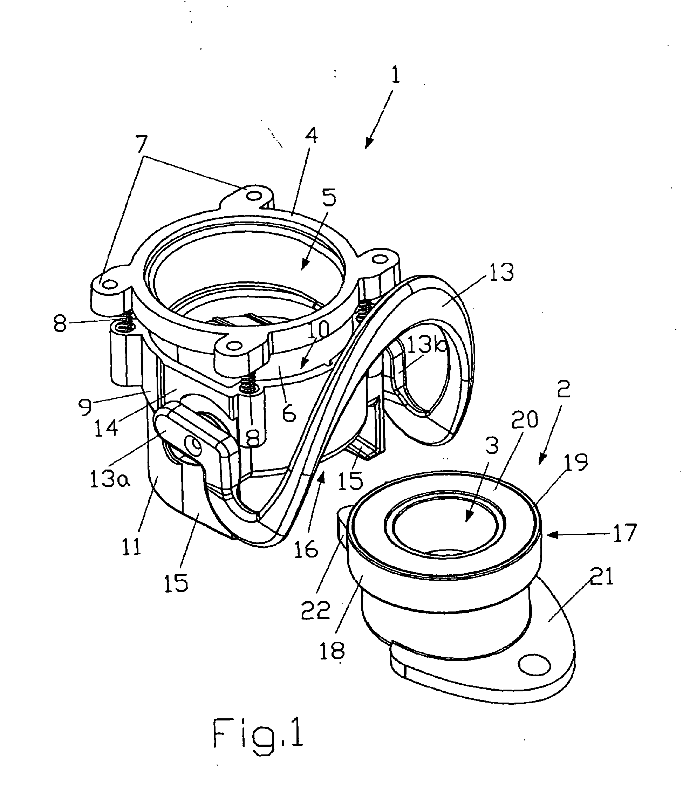

Die Fig. 1 zeigt in einer perspektivischen Ansicht eine Brühvorrichtung für eine Kaffeemaschine. Die Brühvorrichtung weist einen Brühkammeroberteil 1 und einen Brühkammerunterteil 2 auf, welche zusammen eine Brühkammer zur Aufnahme und zum Aufbrühen -Extrahieren- einer Kaffeeportion definieren.

Der Brühkammeroberteil 1 besteht aus einem Innenteil 4 und einem koaxial dazu angeordneten, über Federn 8 beweglich am Innenteil 4 abgestützten Aussenteil 9. Sowohl der Innenteil 4 wie auch der Aussenteil 9 sind mit je einer Ausnehmung 5, 10 versehen, wobei sowohl der Innenteil 4 wie auch der Aussenteil 9 im wesentlichen hohlzylindrisch ausgebildet sind. Die jeweilige Ausnehmung 5, 10 wird seitlich zumindest teilweise durch eine Wandung 6, 11 begrenzt. Der Innenteil 4 ist mit einem Befestigungsflansch 7 versehen, der vier Bohrungen aufweist, über welche er fest mit der Kaffeemaschine verbunden werden kann. Am Brühkammeroberteil 1 ist im weiteren ein Betätigungshebel 13 angeordnet, welcher bügelartig ausgebildet ist und mittels welchem der Innenteil 4 relativ zum Aussenteil 9 bewegt werden kann. Der eine Seitenteil des Betätigungshebels ist mit 13a und der andere mit 13b bezeichnet. Der Aussenteil 9 ist mit einem abgeflachten Abschnitt 14 versehen, an dem der Betätigungshebel 13 drehbar gelagert ist. Auf diesen Betätigungshebel 13 und die damit in Wirkverbindung stehenden Elemente wird nachfolgend noch näher eingegangen. Der Aussenteil 9 des Brühkammeroberteils 1 ist auf der Unterseite mit Führungsschienen 15 versehen, die mit einer seitlichen Einführöffnung 16 zum Einschieben und zur Entnahme des Brühkammerunterteils 2 versehen sind. Diese Führungsschienen 15 dienen dabei dem Fixieren des Brühkammerunterteils 2 am Aussenteil 9. Die Federn 8 sind dazu bestimmt, den Aussenteil 9 nach unten in die dargestellte Endstellung -Offenstellung- zu drücken, in welcher der Brühkammerunterteil 2 am Aussenteil 9 fixierbar bzw. lösbar ist.

Der Brühkammerunterteil 2 ist mit einer Kammer 3 zur Aufnahme einer Kaffeeportion versehen. Dabei spielt es grundsätzlich keine Rolle, ob die Kammer 3 zur direkten Aufnahme von Kaffeepulver oder zur Aufnahme einer mit Kaffeepulver gefüllten Kapsel ausgebildet ist. Der Brühkammerunterteil 2 besteht aus einem Basisteil 17 und einer federnd daran abgestützte Kapselaufnahme 19, deren Innenseite der Aufnahme einer Portionenkapsel dient und die mit einer ringförmigen Stirnfläche 20 versehen ist, an welcher sich ein am Brühkammeroberteil 1 angeordnetes Verschlusselement beim Verschliessen der Kammer 3 anlegt. Der Basisteil 17 ist auf der Oberseite mit einem Flansch 18 versehen, mittels welchem der Brühkammerunterteil 2 an den Führungsschienen 15 des Aussenteils 9 fixiert wird. Vom Basisteil 17 steht zudem ein plattenförmiger Handgriff 21 ab.

In dem in Fig. 1 gezeigten Beispiel ist der Brühkammerunterteil 2 gegenüber des Brühkammeroberteil 1 seitlich verschoben dargestellt. In dieser Stellung kann der Kammer 3 des Brühkammerunterteils 2 eine Kaffeeportion zugeführt, bzw. durch Kippen des Brühkammerunterteils 2 eine -ausgelaugte- Kaffeeportion daraus entfernt werden.

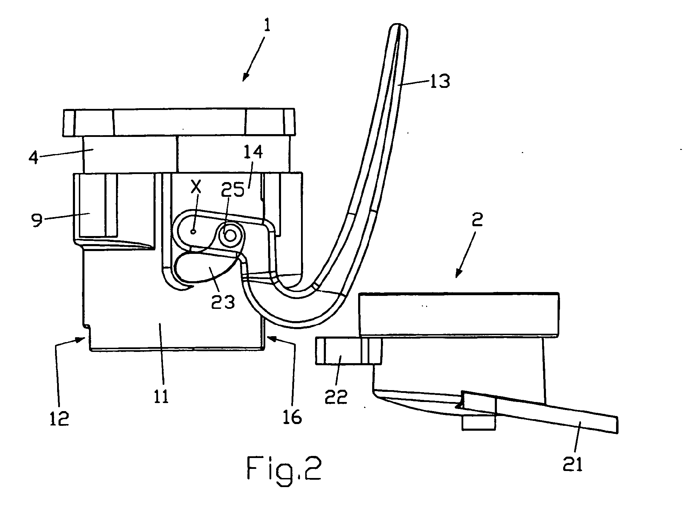

Die Fig. 2 zeigt eine Seitenansicht der beiden Brühkammerteile gemäss Fig. 1. Aus dieser Darstellung ist ersichtlich, dass die Wandung 11 des Aussenteils 9 auf der der seitlichen Öffnung 16 gegenüberliegenden Seite mit einer schlitzförmigen Ausnehmung 12 versehen ist und dass am Brühkammerunterteil 2 ein gegen sein Ende hin konisch zulaufender Führungsnocken 22 angeformt ist. Dieser Führungsnocken 22 dient dem Zentrieren des Brühkammerunterteils 2 beim Fixieren am Aussenteil 9, indem er sich an den Seitenwänden der Ausnehmung 12 ausrichtet. Der Betätigungshebel 13 ist um eine mit X bezeichnete Achse drehbar am Aussenteil 9 des Brühkammeroberteils 1 gelagert. In die beiden abgeflachten Abschnitte 14 dieses Außenteils 9 sind zwei einander gegenüberliegende Nuten 23 in Form von kurvenförmigen, koaxial zur Drehachse X des Betätigungshebels 13 angeordnete Kulissen eingelassen. An den beiden Seitenteilen 13a, 13b (Fig. 1) des Betätigungshebels 13 ist ein Organ in Form einer Achse 25 befestigt, welche sich sowohl durch den Aussenteil 9 wie auch durch den Innenteil 4 hindurch erstreckt und mittels welcher beim Verschwenken des Betätigungshebels 13 eine axiale Relativbewegung zwischen dem Innenteil 4 und dem Aussenteil 9 bewirkt wird. Die beiden kulissenförmigen Nuten 23 sind derart gestaltet, dass sich die Achse 25 beim Verschwenken des Betätigungshebels 13 frei innerhalb dieser Nuten 23 bewegen kann. Damit sich die Achse 25 auch durch den Innenteil 4 erstrecken kann, sind in dessen Wandung ebenfalls zwei einander gegenüberliegenden Nuten eingelassen, welche aus dieser Darstellung jedoch nicht ersichtlich sind.

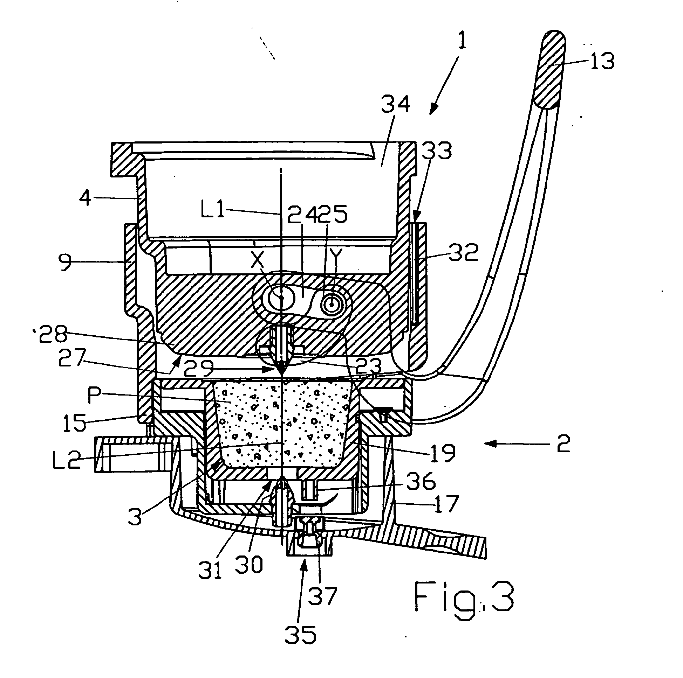

Die Fig. 3 zeigt einen Längsschnitt durch den Brühkammeroberteil 1 und den am Aussenteil 9 fixierten Brühkammerunterteil 2. Wie ersichtlich, ist in der Kapselaufnahme 19 eine mit Kaffeepulver gefüllte Portionenkapsel P aufgenommen. Die dem Brühkammerunterteil 2 zugewandte Unterseite 27 des Innenteils 4 ist als Verschlusselement 28 ausgebildet, mittels welchem die Kapselaufnahme 19 an der ringförmigen Stirnfläche 20 (Fig. 1) verschlossen werden kann. Von der Unterseite 27 des Verschlusselements 28 steht ein oberes Aufstechorgan 29 vor, das dem Aufstechen des Kapseldeckels dient. Am Boden des Basisteils 17 ist ein unteres Aufstechorgan 30 angeordnet, welches dem Aufstechen des Kapselbodens dient.

Die Kapselaufnahme 19 ist dazu mit einer Öffnung 31 versehen, durch welche sich das untere Aufstechorgan 30 beim Verschliessen der Kammer in die Kapselaufnahme 19 hinein erstrecken kann. Auf der Unterseite ist der Basisteil 17 mit einem Getränkeauslass 35 versehen, über welchen das aufgebrühte Kaffeegetränk abfliessen kann. In diesem Getränkeauslass 35 ist ein federbelastetes Verschlussorgan 37 angeordnet, welches den Getränkeauslass 35 im hier gezeigten Zustand verschliesst und ein unerwünschtes Auslaufen -Tropfen- von allfälligem Restwasser bzw. Kaffeegetränk verhindert. Zum Betätigen dieses Verschlussorgans 37 steht von der Unterseite der Kapselaufnahme 19 ein Fortsatz 36 vor. Dieser Fortsatz 36 öffnet das Verschlussorgan 37, wenn die Kammer 3 verschlossen wird und das Verschlusselement 28 die Kapselaufnahme 19 nach unten drückt.

In die Wandung des Innenteils 4 sind zwei einander gegenüberliegende, im wesentlichen horizontal verlaufende Nuten 24 eingelassen, wobei aus der Darstellung gemäss Fig. 3 nur die eine der beiden Nuten 24 ersichtlich ist. Die an der mit Y bezeichneten Stelle kraftschlüssig mit dem Verschlusshebel 13 verbundene Achse 25 erstreckt sich durch die kulissenförmigen Nuten 23 und die im wesentlichen horizontal verlaufenden Nuten 24. Durch die gezeigte Gestaltung wird bei einem Verschwenken des Betätigungshebels 13 eine Relativbewegung zwischen dem Innenteil 4 und dem Aussenteil 9 des Brühkammeroberteils 1 bewirkt, indem sich die Achse 25 beim Hinunterdrücken des Verschlusshebels 13 kraftschlüssig an der Wandung der Nut 24 anlegt und den innenteil 4 in Relation zum Aussenteil 9 nach unten zieht. Wenn der Innenteil 4 fest mit der Kaffeemaschine verbunden ist, wird beim Hinunterdrücken des Betätigungshebels 13 der Aussenteil 9 in Relation zum innenteil 4 in axialer Richtung, d.h. in Richtung der Längsachse L1, nach oben gezogen. Durch diesen Mechanismus wird die Kraft im wesentlichen zentral, d.h. im Bereich einer die Längsachse L1 schneidenden Ebene, vom Verschlusshebel 13 über die Achse 25 auf den Innenteii 4 übertragen. Die Nut 24 begrenzt die Schwenkbewegung des Betätigungshebels 13 und dient dabei als Endanschlag. Die durch das Verschwenken des Betätigungshebels 13 zwischen dem Innenteil 4 und dem Aussenteil 9 ausgeführte Relativbewegung -Hub- ist so gewählt, dass der Deckel und der Boden der in der Kammer 3 aufgenommenen Portionenkapsel P von den beiden Aufstechorganen 29, 30 beim Verschliessen der Kammer 3 sicher aufgestochen werden. Zum Verschliessen der Kammer 3 und zum Aufstechen der Portionenkapsel P ist ein vergleichsweise geringer Hub notwendig. Dies hat den weiteren Vorteil, dass die vom Benutzer über den Betätigungshebel 13 manuell aufzubringende Kraft ebenfalls vergleichsweise gering ist. Der ganze Mechanismus ist so ausgelegt, dass der Kraftangriffspunkt Y der Achse 25 beim Hinunterdrücken des Verschlusshebels 13 von der einen Seite der Drehachse X auf die andere Seite der Drehachse X wandert. Bezogen auf die Darstellung gemäss Fig. 3 wandert der Kraftangriffspunkt Y der Achse 25 beim Hinunterdrücken des Verschlusshebels 13 von der rechten Seite der mit der Längsachse L1 zusammenfallenden Drehachse X um ca. 5° über den Nullpunkt -Totpunkt- hinaus auf die linke Seite der Drehachse X. Ein solche Gestaltung hat den Vorteil, dass der Verschlusshebel 13 im geschlossenen, d.h. nach unten gedrückten Zustand, eine selbstsichernde Position einnimmt, so dass durch die beim Extrahieren der Kaffeeportion P hydraulisch auf das Verschlusseiement 28 und den Brühkammerunterteil 2 einwirkenden Kräfte nicht die Gefahr besteht, dass sich der Verschlusshebel 13 ungewollt öffnet.

Ist der Innenteil 4, wie vorgeschlagen, fest mit der Kaffeemaschine verbunden, so wird durch ein Verschwenken des Betätigungshebels 13 nach unten der Aussenteil 9 in Relation zum Innenteil 4 axial nach oben bewegt, während durch ein Verschwenken des Betätigungshebels 13 nach oben der Aussenteil 9 in Relation zum Innenteil 4 axial nach unten bewegt wird. Um ein Verdrehen des Innenteils 4 gegenüber dem Aussenteil 9 zu verhindern, ist der Innenteil 4 mit einem Vorsprung 32 versehen, der sich in eine am Aussenteil 9 angeordnete Nut 33 erstreckt. Im hier dargestellten Zustand, in dem der Brühkammerunterteil 2 mittels des Aussenteils 9 am Brühkammeroberteil 1 fixiert ist, fällt die Längsachse L1 des Brühkammeroberteils 1 bzw. des Verschlusselements 28 mit der Längsachse L2 des Brühkammerunterteils 2 zusammen, d.h. die beiden Teile sind koaxial zueinander angeordnet. Beim Verschliessen der Kammer 3 findet sowohl eine Relativbewegung des Innenteils 4 gegenüber dem Aussenteil 9, wie auch eine Relativbewegung des Brühkammerunterteils 2 gegenüber dem mit dem Verschlusselement 28 versehen Innenteil 4 in Richtung dieser Längsachsen L1, L2 statt. Die beiden Aufstechorgane 29, 30 sind ebenfalls im Bereich der Längsachsen L1, L2 angeordnet. Schliesslich liegt auch die Drehachse X des Betätigungshebels 13 auf der Längsachse L1.

Der Innenteil 4 des Brühkammeroberteils 1 ist mit einem integralen, andeutungsweise eingezeichneten Heisswasserbereiter 34 versehen. Ein integraler Heisswasserbereiter 34 hat den Vorteil, dass einerseits keine Verbindungsleitungen zwischen dem Verschlusselement 28 und dem Heisswasserbereiter 34 -Boilervorgesehen werden müssen und dass das Verschlusselement 28 andererseits vom Heisswasserbereiter 34 bzw. Brühwasser vorgewärmt wird.

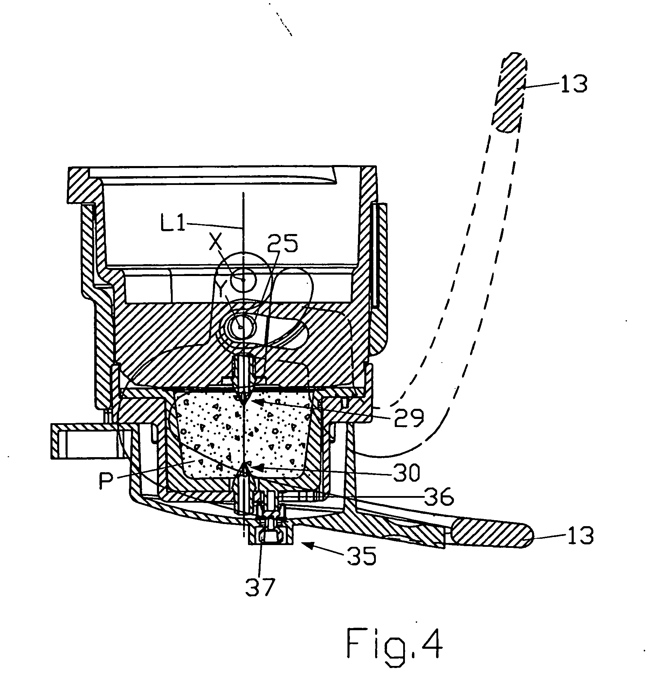

Um von der in Fig. 3 gezeigten Offenstellung in die in Fig. 4 gezeigte Schliessstellung zu gelangen, muss der Betätigungshebel 13 nach unten gedrückt werden, wodurch nun der Aussenteil 9 zusammen mit dem daran fixierten Brühkammerunterteil 2 in Richtung der Längsachse L1 nach oben bewegt wird. Anhand der Fig. 4 ist insbesondere auch ersichtlich, dass sich der Kraftangriffspunkt Y der Achse 25 in der Schliessstellung des Betätigungshebels13 über den Nullpunkt hinaus auf die linke Seite der Drehachse X verschoben hat. Durch die nach oben gerichtete Bewegung des Brühkammerunterteils 2 wird zum einen der Deckel der Portionenkapsel durch das obere Aufstechorgan 29 aufgestochen. Zum anderen legt sich das Verschlusselement 28 an der ringförmigen Stirnfläche 20 der Kapselaufnahme 19 an, so dass diese zusammen mit der darin aufgenommenen Kapsel P nach unten bewegt wird. Dabei dringt das untere Aufstechorgan 30 durch die im Boden der Kapselaufnahme 19 angeordnete Öffnung 31 in die Kapselaufnahme 19 ein und sticht den Boden der Kapsel P auf. Nachdem die Kammer 3 durch das Verschlusselement 28 verschlossen ist, bildet die Kammer 3 die eigentliche Brühkammer.

Beim anschliessenden Brühvorgang wird über das obere Aufstechorgan 29 Brühwasser in die Kapsel P eingeleitet. Das aufgebrühte Kaffeegetränk kann über den unteren Aufstechorgan 30 aus der Portionenkapsel P austreten und über das geöffnete Verschlussorgan 37 und den Getränkeauslass 35 aus der Brühvorrichtung abfliessen.

Anstelle eines manuell zu betätigenden Betätigungshebels 13 kann natürlich auch ein elektromotorischer Antrieb vorgesehen werden.

Die Vorteile der erfindungsgemäss ausgebildeten Brühvorrichtung lassen sich wie folgt zusammenfassen:
Einfacher und kompakter Aufbau. Insbesondere geringe Bauhöhe.
Einfaches und sicheres Aufstechen der in der Kammer aufgenommenen Portionenkapsel, ohne dass eine Drehbewegung zwischen dem Brühkammerunterteil und dem Brühkammeroberteil ausgeführt wird.

Indem die Kaffeeportion dem Brühkammerunterteil zugeführt wird, wenn letzterer seitlich vom Brühkammeroberteil abgezogen ist, genügt eine vergleichsweise geringe Hubbewegung zum Öffnen und Schliessen der Kammer. Ebenso genügt eine vergleichsweise geringe Hubbewegung zum Aufstechen der Kapsel. Der vorgeschlagene Mechanismus ist einfach aufgebaut, besitzt vergleichsweise wenig bewegliche Teile und kann kostengünstig hergestellt werden. Zudem nimmt der Verschlusshebel nach dem Schliessen eine selbstsichernde Position ein.

Die mittels der Verschlusshebelmechanik übertragenen Kräfte wirken zentral, d.h. im Bereich der Längsachse auf die beiden Brühkammerteile ein.

Durch die Parallelbewegung und die zentrale Krafteinleitung wird ein sicheres Abdichten der Kammer erreicht.

Durch die längsbeweglich angeordnete Kapselaufnahme ist das untere Aufstechorgan vor einem Zugriff geschützt im Basisteil des Brühkammerunterteils aufgenommen.

Durch das vorgängig erläuterte Brühmodul und den fest in der Kaffeemaschine eingebauten Verschlusskolben, kann die gesamte Kaffeemaschine sehr kompakt aufgebaut werden. Ausserdem ist das Brühmodul aus einer vergleichsweise geringen Anzahl Elementen aufgebaut, was eine hohe Zuverlässigkeit sicherstellt und ausserdem ein kostengünstige Fertigung erlaubt.

## Patentansprüche

1. Brühvorrichtung für eine Kaffeemaschine, mit einer durch einen Brühkammeroberteil (1) und einen Brühkammerunterteil (2) gebildeten Brühkammer zur Aufnahme und zum Extrahieren einer Kaffeeportion (P), wobei der Brühkammeroberteil (1) mit einem Verschlusselement (28) zum Verschliessen einer im unteren Brühkammerteil (2) angeordneten Kammer (3) versehen ist, und wobei der Brühkammeroberteil (2) einen mit dem Verschlusselement (28) versehenen Innenteil (4) und einen koaxial dazu angeordneten, in axialer Richtung relativ zum Innenteil (4) verschiebbaren Aussenteil (9) aufweist, an dem der Brühkammerunterteil (2) fixierbar ist, und wobei am Aussenteil (9) ein Betätigungshebel (13) drehbar gelagert. ist, der über ein exzentrisch zur Drehachse (X) des Betätigungshebels (13) angeordnetes Organ (25) derart mit dem Innenteil (4) in Wirkverbindung steht, dass bei einem Verschwenken des Betätigungshebels (13) eine axiale Relativbewegung zwischen dem Innenteil (4) und dem Aussenteil (9) ausgeführt wird, **dadurch gekennzeichnet, dass** in der Wandung (11) des Aussenteils (9) zwei einander gegenüberliegende, im wesentlichen koaxial zur Drehachse (X) des Betätigungshebels (13) verlaufende, kulissenförming und Kurvenförmig ausgebildete Nuten (23) eingelassen sind, während in der Wandung (6) des Innenteils (4) zwei einander gegenüberliegende, im wesentlichen horizontal verlaufende Nuten (24) eingelassen sind, und dass am Betätigungshebel (13) das Organ (25) in Form einer Achse fixiert ist, welches sich sowohl durch die Nuten (23) des Aussenteils (9) wie auch durch die Nuten (24) des Innenteils (4) erstreckt.

2. Brühvorrichtung nach Anspruch 1, wobei das Organ (25) derart am Betätigungshebel (13) angeordnet ist, dass beim Verschwenken des Betätigungshebels (13) von einer Offen- in eine Schliessstellung der Kraftangriffspunkt (Y) des Organs (25) am Betätigungshebel (13) von der einen Seite der Drehachse (X) des Betätigungshebels (13) auf die andere Seite der Drehachse (X) wandert, so dass der Betätigungshebel (13) im geschlossenen Zustand eine selbstsichernde Position einnimmt.

3. Brühvorrichtung nach Anspruch 1 oder 2, wobei der Aussenteil (9) auf der Unterseite mit Mitteln zum Fixieren des Brühkammerunterteils (2) versehen ist.

4. Brühvorrichtung nach Anspruch 3, wobei die Mittel zum Fixieren des Brühkammerunterteils (2) am Aussenteil (9) Führungsschienen (15) umfassen, die mit einer seitlichen Öffnung (16) zum Einführen und zur Entnahme des Brühkammerunterteils (2) versehen sind.

5. Brühvorrichtung nach Anspruch 4, wobei der Aussenteil (9) über Federn (8) derart am innenteil (4) abgestützt ist, dass die Federn (8) den Aussenteil (9) in einer unteren Offenstellung zu halten bestrebt sind, in welcher der Brühkammerunterteil (2) am Aussenteil (9) fixierbar bzw. lösbar ist.

6. Brühvorrichtung nach nach einem der vorhergehenden Ansprüche, wobei der Innenteil (4) mit Mitteln (7) zum Fixieren an der Kaffeemaschine versehen ist.

7. Brühvorrichtung nach nach einem der vorhergehenden Ansprüche, wobei sowohl der Innenteil (4) wie auch der Aussenteil (9) mit je einer Ausnehmung (5, 10) versehen ist, welche seitlich zumindest teilweise durch eine Wandung (6, 11) begrenzt ist.

8. Brühvorrichtung nach Anspruch 1, wobei die Wandung des Aussenteils (9) mit zwei einander gegenüberliegenden, abgeflachten Abschnitten (14) versehen ist, an denen der Betätigungshebel (13) drehbar gelagert ist und in die die kulissenförmig ausgebildeten Nuten (24) eingelassen sind.

9. Brühvorrichtung nach Auspruch 4, wobei der Brühkammerunterteil (2) einen Basisteil (17) und eine federnd daran abgestützte Kapselaufnahme (19) umfasst, wobei der Basisteil (17) mit einem korrespondierend zu den Führungsschienen (15) ausgebildeten Flansch (18) versehen ist, und wobei die Kapselaufnahme (19) beim Verschliessen der Kammer (3) durch das Verschlusselement (28) in den Basisteil (17) hineingedrückt wird.

10. Brühvorrichtung nach Anspruch 9, wobei die Wandung (11 ) des Aussenteils (9) auf der der seitlichen Öffnung (16) gegenüberliegenden Seite mit einer Ausnehmung (12) versehen ist, und dass der Basisteil (17) mit einem konisch zulaufenden Führungsnocken (22) versehen ist, mittels welchem der Basisteil (17) beim Einführen des Brühkammerunterteils (2) in die Führungsschienen (15) um die Längsachse (L1) ausgerichtet wird.

11. Brühvorrichtung nach Anspruch 10, wobei der Basisteil (17) auf der dem Führungsnocken (21) gegenüberliegenden Seite mit einem Handgriff (22) versehen ist.

12. Brühvorrichtung nach Anspruch 9, wobei auf der Unterseite des Verschlusselements (28) und am Boden des Basisteils (17) zumindest je ein Aufstechorgan (29, 30) zum Aufstechen einer Portionenkapsel (P) angeordnet ist, wobei die Kapselaufnahme (19) mit einer Öffnung (31) versehen ist, durch welche sich das am Boden des Basisteils (17) angeordnete Aufstechorgan (30) beim Verschliessen der Kammer (3) in die Kapselaufnahme (19) hinein erstrecken kann.

13. Brühvorrichtung nach einem der vorhergehenden Ansprüche, wobei der Brühkammerunterteil (2) mit einem Getränkeauslass (35) versehen ist, in welchem ein federbelastetes Verschlussorgan (37) angeordnet ist, welches den Getränkeauslass (35) bei nicht verschlossener Kammer (3) verschliesst.

14. Brühvorrichtung nach Anspruch 13, wobei das Verschlusselement (28) mit einem korrespondierend zum Getränkeauslass (35) angeordneten Fortsatz (36) versehen ist, welcher das Verschlussorgan (37) beim Schliessen der Kammer (3) in den geöffneten Zustand überführt.

15. Brühvorrichtung nach einem der vorhergehenden Ansprüche, wobei der Brühkammeroberteil (1) mit einem integralen Heisswasserbereiter (34) versehen ist.

## Claims

1. A dispensing device for a coffee machine with a delivery chamber comprising a delivery chamber top section (1) and a delivery chamber bottom section (2) to contain and then extract a portion of coffee (P). Said delivery chamber top section (1) is fitted with a closing element (28) to close a chamber (3) set in the delivery chamber bottom section (2). The aforementioned delivery chamber top section (1) has an internal section (4) complete with closing element (28) and an outer section (9), located coaxially, to slide in an axial direction compared to the internal section (4). The bottom section of the delivery chamber (2) can be fixed to this aforementioned internal section (4). In correspondence to the outer section (9), there is an actuation lever (13) with rotatable mounting in the internal section (4). A part (25) fitted eccentrically compared to the rotation axis (X) of the actuation lever (13), creates an operative relationship between said actuation lever (13) and the internal section (4). This means that when the actuation lever (13) is turned, there is a relative axial movement between the internal section (4) and the outer section (9), **characterised by** the following: on the side (11) of the outer section (9) there are two grooves (23) with curved and slide layout, one opposite the other and essentially extending coaxially to the rotation axis (X) of the actuation lever(13); on the side (6) of the internal section (4), there are two grooves (24), placed one in front of the other, essentially extending horizontally and the part (25) is secured to the actuation lever (13) in the form of an axis that extends both across the grooves (23) in the outer section (9) and across the grooves (24) in the internal section (4).

2. A dispensing device as recited in the claim 1, wherein the part (25) is fitted in such a way on the actuation lever (13) that, when the actuation lever (13) is turned from the open to the closed position, the force application point (Y) of the part (25) on the actuation lever (13) passes from one side of the actuation lever (13) rotation axis (X) to the other. This means that when closed, the actuation lever (13) adopts a self-locking position.

3. A dispensing device as recited in the claims 1 or 2, wherein the bottom of the outer section (9) is equipped with means for securing the bottom section of the delivery chamber (2).

4. A dispensing device as recited in the claim 3, wherein the means for securing the bottom section of the delivery chamber (2) to the outer section (9) include guides (15) equipped with a side opening (16) to insert or remove the aforementioned bottom section of the delivery chamber (2).

5. A dispensing device as recited in the claim 4, wherein the outer section (9) is supported by springs (8) at the inner section (4) in such a way that the springs (8) tend to retain the outer section (9) in a position where it is open at the bottom so that the bottom section of the delivery chamber (2) can be secured to or unhooked from said outer section (9).

6. A dispensing device as recited in any of the previous claims, wherein the inner section (4) is equipped with means (7) for securing to the coffee machine.

7. A dispensing device as recited in any of the previous claims, wherein both the inner section (4) and the outer section (9) are fitted with a slot (5, 10) limited at least in part by a side wall (6, 11) on one side.

8. A dispensing device as recited in claim 1, wherein the side of the outer section (9) is equipped with two flattened sections (14), one opposite the other, on which the actuation lever (13) is fitted on rotatable mounting and with grooves (24) with sliding configuration.

9. A dispensing device as recited in claim 4, wherein the bottom part of the delivery chamber (2) includes a base section (17) and capsule housing (19) supported on it elastically, where said base section (17) is fitted with a flange (18) having a configuration that corresponds to the guides (15), and where the closure of the chamber (3) causes the capsule housing (19) to be pressed by the base section (17) of the closing element (28).

10. A dispensing device as recited in claim 9, wherein the side (11) of the outer section (9) is equipped with a slot (12) on the opposite side to the side opening (16), and the base section (17) has a guide cam (22) terminating in a conical shape, through which said base section (17) is orientated along the lengthways axis (L1) when the bottom part of the delivery chamber (2) is inserted into the guide rails (15).

11. A dispensing device as recited in claim 10, wherein the base section (17) is equipped with a handgrip (21) on the side opposite to the guide cam (22).

12. A dispensing device as recited in claim 9, wherein the bottom side of the closing element (28) level with the bottom of the base section (17), has at least one perforation means (29, 30) to pierce a single-portion capsule (P) and the capsule housing (19) has one opening (31) through which the perforation means (30) on the bottom of the base section (17) can slide into the capsule housing (19) when the chamber (3) is closed.

13. A dispensing device as recited in any of the above claims, wherein the bottom section of the delivery chamber (2) is equipped with a beverage pouring spout (35) complete with a sprung closing means (37) to close the beverage pouring spout (35) whenever the chamber (3) is not closed.

14. A dispensing device as recited in claim 13, wherein the closing element (28) is equipped with an extension (36) set out level with the beverage pouring spout (35) and which, upon closure of chamber (3) shifts the closing means (37) to the open position.

15. A dispensing device as recited in any of the above claims, wherein the top section of the delivery chamber (1) is equipped with a fully integrated device for preparing hot water (34).

## Revendications

1. Un dispositif d'extraction pour une machine à café, avec une chambre d'extraction constituée d'une partie supérieure de chambre d'extraction (1) et d'une partie inférieure de chambre d'extraction (2) pour la collecte et l'extraction d'une portion de café (P), où la partie supérieure de chambre d'extraction (1) est dotée d'un élément de fermeture (28) servant à fermer une chambre (3) située dans la partie inférieure de chambre d'extraction (2), et où la partie supérieure de chambre d'extraction (1) présente une partie intérieure (4) dotée de l'élément de fermeture (28) et une partie extérieure (9) disposée coaxialement, coulissant en sens axial par rapport à la partie intérieure (4), à laquelle peut être fixée la partie inférieure de chambre d'extraction (2), et où, au niveau de la partie extérieure (9), est supporté de façon rotative un levier d'actionnement (13) qui, par l'intermédiaire d'un organe (25) disposé excentriquement par rapport à l'axe de rotation (X) du levier d'actionnement (13) lui-même, interagit avec la partie intérieure (4) de manière à ce qu'une rotation du levier d'actionnement (13) détermine un mouvement axial relatif entre la partie intérieure (4) et la partie extérieure (9),
**caractérisé en ce que** sont réalisées, dans la paroi (11) de la partie extérieure (9), deux rainures (23) en forme de coulisse et curvilignes, disposées l'une en face de l'autre, qui se développent essentiellement coaxialement à l'axe de rotation (X) du levier d'actionnement (13), tandis que sont réalisées, dans la paroi (6) de la partie intérieure (4), deux rainures (24) disposées l'une en face de l'autre qui se développent essentiellement horizontalement, et **en ce que** l'organe (25) est fixé au levier d'actionnement (13) sous forme d'un axe qui s'étend à travers les rainures (23) de la partie extérieure (9) ainsi qu'à travers les rainures (24) de la partie intérieure (4).

2. Le dispositif d'extraction selon la revendication 1, **caractérisé en ce que** l'organe (25) est disposé sur le levier d'actionnement (13) d'une façon telle qu'en tournant ledit levier d'actionnement (13) d'une position d'ouverture à une position de fermeture, le point d'application de la force (Y) de l'organe (25) sur le levier d'actionnement (13) passe d'un côté de l'axe de rotation (X) dudit levier d'actionnement (13) à l'autre côté de l'axe de rotation (X), de manière à ce que le levier d'actionnement (13) prenne une position autobloquante dans la condition de fermeture.

3. Le dispositif d'extraction selon la revendication 1 ou 2, **caractérisé en ce que** la partie extérieure (9) est dotée, côté inférieur, de moyens servant à fixer la partie inférieure de chambre d'extraction (2).

4. Le dispositif d'extraction selon la revendication 3, **caractérisé en ce que** les moyens de fixation de la partie inférieure de chambre d'extraction (2) à la partie extérieure (9) comprennent des guides (15) présentant une ouverture latérale (16) pour l'insertion et l'extraction de la partie inférieure de chambre d'extraction (2).

5. Le dispositif d'extraction selon la revendication 4, **caractérisé en ce que** la partie extérieure (9) est supportée par des ressorts (8) au niveau de la partie intérieure (4) de manière à ce que lesdits ressorts (8) aient tendance à retenir la partie extérieure (9) dans une position d'ouverture inférieure dans laquelle la partie inférieure de chambre d'extraction (2) peut être fixée ou décrochée de la partie extérieure (9).

6. Le dispositif d'extraction selon une des revendications précédentes, **caractérisé en ce que** la partie intérieure (4) est dotée de moyens (7) pour la fixation à la machine à café.

7. Le dispositif d'extraction selon une des revendications précédentes, **caractérisé en ce que** la partie intérieure (4) et la partie extérieure (9) présentent chacune une cavité (5, 10) qui est latéralement limitée, au moins en partie, par une paroi (6, 11).

8. Le dispositif d'extraction selon la revendication 1, **caractérisé en ce que** la paroi de la partie extérieure (9) comprend deux sections (14) aplaties, disposées l'une en face de l'autre, sur lesquelles est supporté de façon rotative le levier d'actionnement (13) et où sont réalisées les rainures (24) en forme de coulisse.

9. Le dispositif d'extraction selon la revendication 4, **caractérisé en ce que** la partie inférieure de chambre d'extraction (2) comprend une partie de base (17) et un logement pour capsule (19) supporté de façon élastique sur celle-ci, **en ce que** la partie de base (17) est dotée d'une bride (18) ayant une conformation correspondant aux guides (15), et **en ce que**, lors de la fermeture de la chambre (3), le logement pour capsule (19) est pressé dans la partie de base (17) par l'élément de fermeture (28).

10. Le dispositif d'extraction selon la revendication 9, **caractérisé en ce que** la paroi (11) de la partie extérieure (9) présente un évidement (12) sur le côté opposé à l'ouverture latérale (16), et la partie de base (17) est dotée d'une came de guidage (22), qui se termine en forme de cône, par l'intermédiaire de laquelle, lors de l'insertion de la partie inférieure de chambre d'extraction (2) dans les rails de guidage (15), la partie de base (17) s'oriente autour de l'axe longitudinal (L1).

11. Le dispositif d'extraction selon la revendication 10, **caractérisé en ce que**, sur le côté opposé à la came de guidage (22), la partie de base (17) est dotée d'une poignée (21).

12. Le dispositif d'extraction selon la revendication 9, **caractérisé en ce qu'**il y a, sur le côté inférieur de l'élément de fermeture (28) ainsi qu'au niveau du fond de la partie de base (17), au moins un organe de perforation (29, 30) servant à perforer une capsule monodose (P), et **en ce que** le logement pour capsule (19) présente une ouverture (31) à travers laquelle, lors de la fermeture de la chambre (3), l'organe de perforation (30) situé sur le fond de la partie de base (17) peut pénétrer dans le logement pour capsule (19).

13. Le dispositif d'extraction selon une des revendications précédentes, **caractérisé en ce que** la partie inférieure de chambre d'extraction (2) est dotée d'une sortie (35) pour la boisson, dans laquelle est disposé un organe de fermeture (37) à ressort qui ferme ladite sortie (35) pour la boisson quand la chambre (3) n'est pas fermée.

14. Le dispositif d'extraction selon la revendication 13, **caractérisé en ce que** l'élément de fermeture (28) est doté d'un prolongement (36) qui est disposé de façon à correspondre à la sortie (35) pour la boisson et qui, lors de la fermeture de la chambre (3), déplace l'organe de fermeture (37) dans la condition ouverte.

15. Le dispositif d'extraction selon une des revendications précédentes, **caractérisé en ce que** la partie supérieure de chambre d'extraction (1) est dotée d'un préparateur d'eau chaude (34) intégré.
